# EUROPEAN PATENT APPLICATION

(11) **EP 2 899 399 A1**
(43) Date of publication of application: **29.07.2015**
(21) Application number: 14152781.2
(22) Date of filing: 28.01.2014
(51) Int. Cl.: F03G 6/06

(54) **Solar power plant**

(71) Applicant: ALSTOM Technology Ltd, 5400 Baden (CH)
(72) Inventor: Aga, Vipluv, 8050 Zürich (CH); Zagorskiy, Alexander, 5430 Wettingen (CH)
(74) Representative: Alstom Technology Ltd

(57) **Abstract**

The invention relates to a hybrid solar power plant with a gas turbine (32) and combustor (30) a compressor (10) for compressing air for combustion and a booster compressor for boosting the pressure of a portion of the compressed air to be used as a working fluid in a solar receiver (20). A control valve (36) is arranged fluidly between the compressor (10) and the booster compressor (15), and configured to adjust a ratio of the air compressed by the compressor (10) flowing directly to the combustor (30) and the booster compressor (15).

## Description

### TECHNICAL FIELD

The present disclosure relates to concentrated Solar power plants, in particular solar power plants that use gas as the working fluid and further incorporate a topping gas turbines.

### BACKGROUND INFORMATION

Concentrated Solar Power using Central receiver technology is one where a working medium is heated in a central receiver tower by focusing the sun's rays using mirrors called heliostats arrayed on the ground around it. Typically a pressurized air receiver heats up air in the tower to temperatures above 700°C. This hot air may then be expanded through a gas turbine after its temperature is raised further in a combustor using, for example, natural gas. The exhaust from the gas turbine is typically used to further run a bottoming cycle consisting of a steam turbine by producing steam in a heat recovery steam generator. Alternately, if the operating temperature is low, an organic Rankine cycle may be alternatively or additionally be used.

Hot pressurized air is produced on top of the tower may be directly expanded through a turbine or first fed into a combustion chamber to increase gas so by increasing power as well as increasing turbine efficiency. Gas turbine operation could also be used to produce power when there is no sunshine or ride out intermittencies.

Examples of solar pressurized air receivers coupled with topping combustor gas turbines in combined cycle operation are described in US patent no. 5444972, US application no. 2011/0233940 A1 and US patent application no. 2006/0174622 A1. These documents show the addition of solar heat directly to the HRSG to add heat to the bottoming cycle or simply to the combustor.

US Patent application no. US2011 /0233940 discusses another example of a solar combined cycle plant where solar energy is added after the compressor as well as to the stream coming through a solar reheat steam generator. This arrangement requires high precision mass flow control of the solar heated air as it has to drive the gas turbine and steam turbine at the same time. As a result, it can be difficult to ensure full utilisation of the exhaust of the gas turbine or alternatively requires oversizing of the receiver to ensure the demands of two loads can be met.

Another typical integration method involves solar heat to generate steam which is then further heated by the exhaust of a gas turbine. Such a system is inherently inflexible as the gas turbine exhaust and the solar heating typically cannot be ramped up and down quickly since the steam temperature exiting the boiler and entering the superheater need to be match forcing the gas turbine to operate at part load.

As efficiency and reliability of power supply are two important factors in any power generation plant, there is a constant need to provide power solutions that meet this need.

### SUMMARY

Provided is a flexible solar plant with gas generation that can operate at high efficiency and reliability even when the sunlight is intermittent by leveraging the ability to burn gas when the sunshine is low.

There are several problems that the current invention addresses. When the solar radiation changes or the gas turbine load is reduced, the mass flow rate through the gas turbine and that through the solar receiver is coupled leading to long transient times and lower flexibility as both have different ramp limits for an efficient and reliable operation. An aspect addresses this problem by including a control valve, arranged fluidly between the first compressor and the booster compressor, and configured to adjust a ratio of the air compressed by the first compressor flowing directly to the combustor and the booster compressor.

At high temperatures any tower receiver radiates energy depending on the temperature and surface area thereby losing part of the incident solar energy. Thus it is desirable to make a solar receiver of smallest possible surface area. As air has to be pumped along long pipes to the receiver and back significant pressure losses are generated. An aspect addresses this problem by boosting the pressure without inducing pressure losses by including an intercooler adapted to cool at least a portion of the air exhausted from the compressor before the air enters the booster compressor, wherein in an aspect the intercooler is incorporated into the heat recovery steam generator.

The air coming to a combustor inlet from an air receiver should also be controllable or maintained at design conditions to deal with oscillations, flame blowout etc. The temperature from a solar receiver may be controlled by changing the mass flow rate to the receiver when there is a change in the solar radiation. This can be done by having a bypass with a first end located fluidly between the booster compressor and the solar receiver and a second end fluidly located between the combustor and the solar receiver, the bypass line having a bypass valve adapted to control a volume of air through the bypass line. Using a bypass valve that mixes pre and post receiver air, the receiver can be maintained and ramped according to its own characteristic without affecting the ramp and flexibility capabilities of the gas turbine cycle. By simultaneous controlling the amount of air extracted from the gas turbine after the compressor and the fraction of the extracted air, which bypasses the receiver, the temperature of the hot gas re-entering the gas turbine can be effectively controlled.

In another aspect the combustor is replaced by a heater that performs the function of increasing the enthalpy of a working fluid passing through the heater.

It is a further object of the invention to overcome or at least ameliorate the disadvantages and shortcomings of the prior art or provide a useful alternative.

Other aspects and advantages of the present disclosure will become apparent from the following description, taken in connection with the accompanying drawing which by way of example illustrates exemplary embodiments of the present invention.

### BRIEF DESCRIPTION OF THE DRAWINGS

By way of example, an embodiment of the present disclosure is described more fully hereinafter with reference to the accompanying drawings, in which:
Figure 1 is a schematic view of a hybrid solar plant according to an exemplary embodiment of the disclosure; and
Figure 2 is a schematic view of alternate hybrid solar plant according to an exemplary embodiment of the disclosure; and

### DETAILED DESCRIPTION

Exemplary embodiments of the present disclosure are now described with references to the drawing, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiment disclosed herein. For example, although described exemplary embodiments use air as a working fluid, air may be substituted for any other suitable gaseous working fluid.

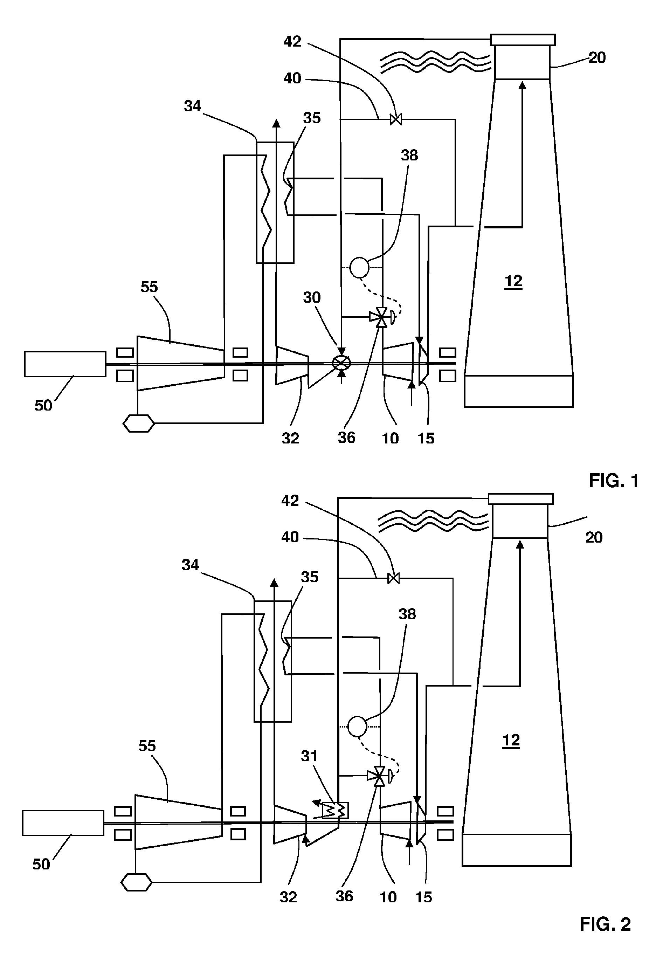

In an exemplary embodiment of a solar power plant shown in Fig. 1 air first enters a compressor 10. A part of the compressed air is extracted to a booster compressor 15 for further compression while the remaining air is into a combustor 30 and hence to a gas turbine 32 that drives a generator 50. Exhaust gases from the gas turbine 32 are directed through a heat recover steam generator 34 before being exhausted to atmosphere. Energy from steam generated in the heat recovery steam generator 34 may be converted in electrical power by a steam turbine 55, forming part of a Rankine cycle, connected to a generator 50.

The amount of the extraction is determined by the available solar heat as well as by the temperature difference between the solar receiver and the air at the compressor outlet. The air extraction ratio is sized according to the amount of energy contribution foreseen from the solar receiver 20 and the amount from gas combustion. In an exemplary embodiment the required ratio is achieved by a temperature control system that includes a control valve 36 and temperature measurement devices 38 measuring air temperature exiting the compressor 10 and entering the combustor 30. The control system further includes control logic to manipulate a control valve 36 that is configured and located to vary the air extraction ratio.

The extracted air directed through the booster compressor 15 is further directed to a solar receiver 12 located at a top of a solar tower 12. The purpose of the booster compressor 15 is to increase air pressure in order to overcome the pressure losses in piping and in the solar receiver 20. Without the boost in pressure air would preferentially flow directly to the combustor 30. The booster compressor 15 thus boosts the control capability of the temperature control system.

In an exemplary embodiment shown in Fig.1 compressed air from the compressor 10 is optionally cooled in an intercooler 35 by water or fluid, preferably from the bottoming cycle in the heat recovery steam generator 34, before the entering the booster compressor 15. Cooling can reduce the size requirement of the solar receiver 20 for a given solar thermal heat flux by increasing the air density of the compressed air. Once heated in the solar receiver 20 heated air is transported down the solar tower 12 and then mixed with air from the outlet of the compressor 10 before entering the combustor 30.

A further exemplary embodiment shown in Fig. 1 includes the optional feature of a bypass line 40 fluidly connecting the outlet of the booster compressor 15 to a return line from the solar receiver 20 so as to bypass the solar receiver 20. When configured to compromise a controllable bypass valve 42, the bypass line 40 allows part of the air after the booster-compressor 15 to controllably bypass the solar receiver 20 and mix with the solar heated air. In each case the bypass line 40 makes it possible to reduction the air temperature of the solar heated air exiting the receiver solar receiver 20. This makes it possible to reduce or modify the power of the cycle during solar intermittencies without changing the air mass flow through the gas turbine 32. The bypass 40 further makes it possible to control the air temperature going to the combustor 30 wherein the ramp rate can be modulated by changing the fuel flow rate. It also makes it possible to controllably limit the temperature of air passing through piping from the solar received down through the solar tower 12 thus making is possible to use lower temperature resistant materials in these lines.

Although the disclosure has been herein shown and described in what is conceived to be the most practical exemplary embodiment, it will be appreciated by those skilled in the art that the present disclosure can be embodied in other specific forms. For example the combustor 30 shown in Fig .1 may be substituted for a heater 31 shown in Fig. 2 wherein the heater performs the equivalent function of the combustor of increasing the enthalpy of the working gas passing through the heater 31. The presently disclosed embodiments are therefore considered in all respects to be illustrative and not restricted. The scope of the disclosure is indicated by the appended claims rather that the foregoing description and all changes that come within the meaning and range and equivalences thereof are intended to be embraced therein.

### REFERENCE NUMBERS

- 10: Compressor
- 12: Solar tower
- 15: Booster Compressor
- 20: Solar Receiver
- 30: Combustor
- 31: Heater
- 32: Gas Turbine
- 34: Heat recovery steam generator
- 35: Intercooler
- 36: Control Valve
- 38: Temperature device
- 40: Bypass
- 50: Generator
- 55: Steam Turbine

## Claims

1. A solar power plant comprising:
a first compressor (10) with an exhaust adapted to discharge compressed a gaseous working fluid from the exhaust;
a booster compressor (15) fluidly connected to the exhaust and adapted to further compression at least a portion of the gaseous working fluid from the exhaust;
a solar receiver (20) fluidly connected to the booster compressor (15) and adapted to receive and transfer solar energy to the gaseous working fluid from the booster compressor (15);
a heater (30) fluidly connected to the solar receiver (20) and the exhaust and adapted to combust a fuel mixed with the gaseous working fluid from either or both the solar receiver (20) and the first compressor (10);
a control valve (36), arranged fluidly between the first compressor (10) and the booster compressor (15), and configured to adjust a ratio of the gaseous working fluid compressed by the first compressor (10) flowing directly to the heater (30) and the booster compressor (15).

2. The power plant of claim 1 further including a temperature measurement device configured and arranged to measure the temperature of the gaseous working fluid exhausted from the first compressor (10) and the temperature of the gaseous working fluid returning from the solar receiver (20) wherein the control valve (36) is configured to adjust the ratio of the gaseous working fluid based on the measure temperature of the gaseous working fluid from the solar receiver (20) and the gaseous working fluid exhausted from the first compressor (10).

3. The power plant of claims 1 or 2 further comprising a bypass (40) with a first end located fluidly between the booster compressor (15) and the solar receiver (20) and a second end fluidly located between the heater (30) and the solar receiver (20), the bypass line (40) having a bypass valve (42) adapted to control a volume of gaseous working fluid through the bypass line (40).

4. The power plant of claim any one of claims 1 to 3 further including an intercooler (35) adapted to cool at least a portion of the gaseous working fluid exhausted from the first compressor (10) before the gaseous working fluid enters the booster compressor (15).

5. The solar power plant of claim 1 wherein the gaseous working fluid is air and the heater is a combustor (30) adapted to combust a fuel mixed with the gaseous working fluid from either or both the solar receiver (20) and the first compressor (10).

6. The solar power plant of claim 5 further comprising a gas turbine (32) adapted to expand an exhaust gas from the combustor (30) and a heat recovery steam generator (34) connected to the turbine and adapted to receive and cool expanded exhaust gas from the gas turbine (32).

7. The solar power plant of claim 6 wherein the intercooler (35) is incorporated into the heat recovery steam generator (34).
